# EUROPÄISCHE PATENTSCHRIFT

(11) **EP 1 370 450 B1**
(45) Veröffentlichungstag und Bekanntmachung des Hinweises auf die Patenterteilung: **16.11.2005**
(21) Anmeldenummer: 02727221.0
(22) Anmeldetag: 13.03.2002
(51) Int. Cl.: B60T 8/40, F04B 11/00

(54) **KOLBENPUMPE**
PISTON PUMP
POMPE A PISTON

(30) Priorität: 14.03.2001 DE 10112618
(43) Veröffentlichungstag der Anmeldung: 17.12.2003
(73) Patentinhaber: ROBERT BOSCH GMBH, 70442 Stuttgart (DE)
(72) Erfinder: SCHMITT, Edgar, 71665 Vaihingen (DE); ALAZE, Norbert, 71706 Markgroeningen (DE); SCHAEFER, Ernst-Dieter, 74336 Brackenheim (DE); EGLE, Marcus, 71672 Marbach (DE); BRAUN, Jochen, 71296 Heimsheim (DE); ECKSTEIN, Ursula, 71701 Schwieberdingen (DE); ZIMMERMANN, Peter, 74360 Ilsfeld (DE); DEBUSMANN, Christian, 85395 Attenkirchen (DE); DREYER, Manfred, 70806 Kornwestheim (DE)
(86) Internationale Anmeldenummer: PCT/DE2002/000891
(87) Internationale Veröffentlichungsnummer: WO 2002/072398

(56) Entgegenhaltungen:
- WO-A-01/00990
- WO-A-90/07060
- WO-A-90/11212
- DE-A- 4 027 794
- DE-A- 4 311 263
- DE-A- 19 732 771
- US-A- 4 363 607
- US-A- 5 797 430
- PATENT ABSTRACTS OF JAPAN vol. 2000, no. 16, 8. Mai 2001 (2001-05-08) -& JP 2001 001885 A (UNISIA JECS CORP), 9. Januar 2001 (2001-01-09)
- PATENT ABSTRACTS OF JAPAN vol. 2000, no. 02, 29. Februar 2000 (2000-02-29) -& JP 11 303731 A (NISSAN MOTOR CO LTD), 2. November 1999 (1999-11-02)

## Beschreibung

### Stand der Technik

Die Erfindung betrifft eine Kolbenpumpe nach dem Oberbegriff des Anspruchs 1. Die Kolbenpumpe ist insbesondere für eine hydraulische, schlupfgeregelte Fahrzeugbremsanlage vorgesehen.

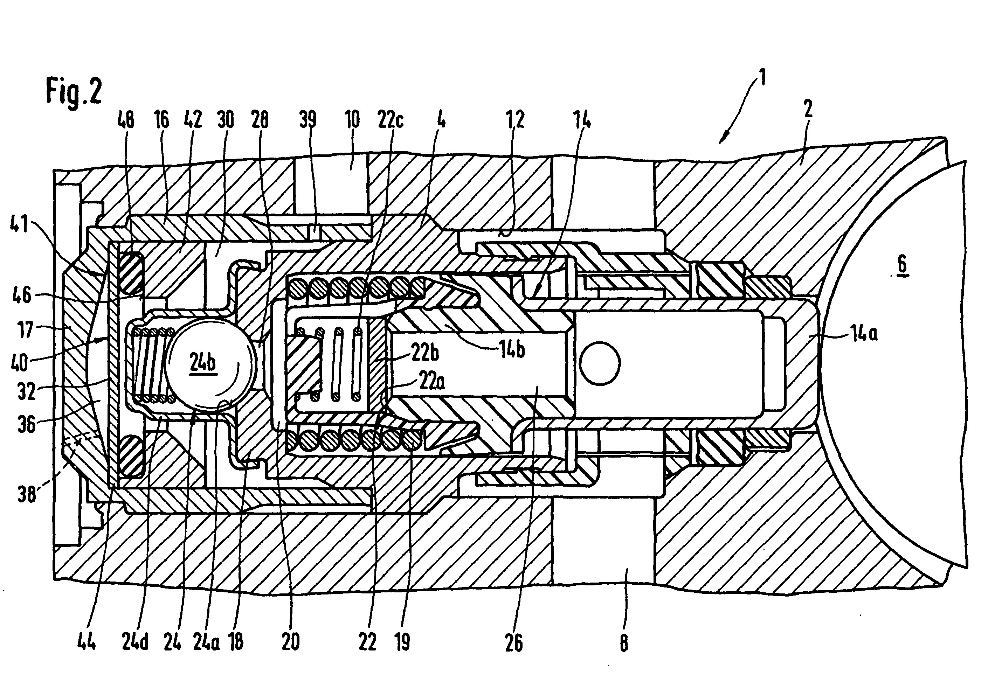

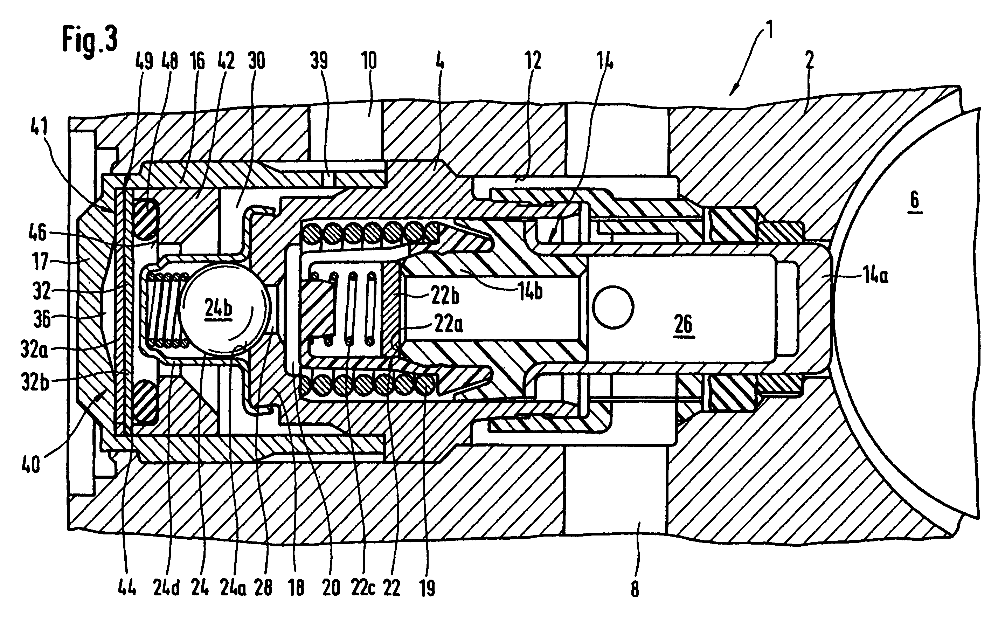

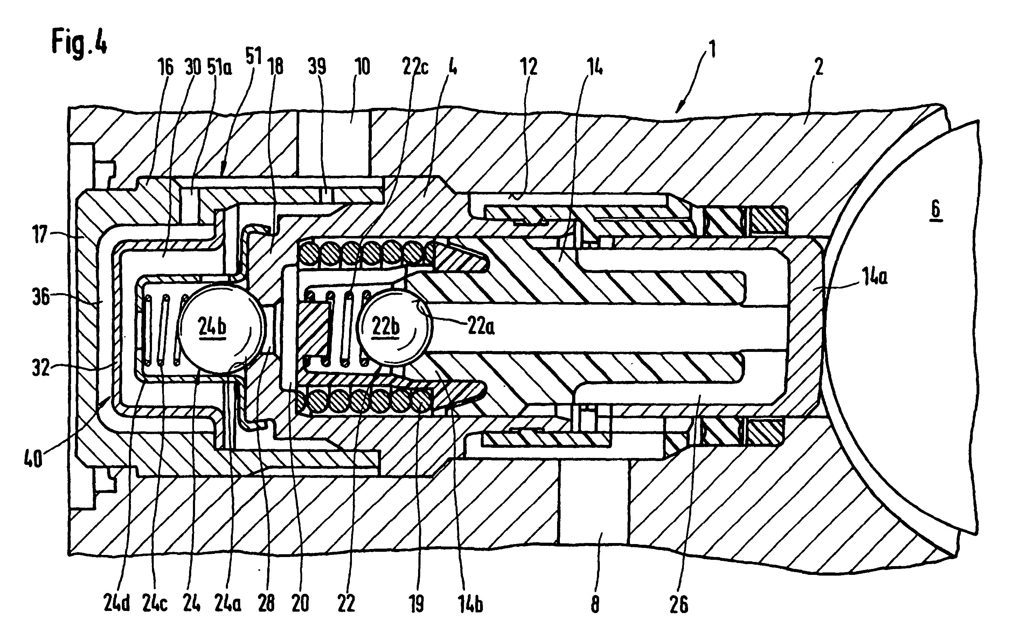

Eine Kolbenpumpe mit Pulsationsglättungseinrichtung entsprechend den Merkmalen des Oberbegriffs des Anspruchs 1 ist beispielsweise aus der WO 90/07060 A 1 (Figur 2) bereits bekannt. Beim Betrieb der Kolbenpumpe auftretende Druckspitzen bewirken eine Verformung der nachgiebigen Wand (elastomeres Formteil 46) in einen Gegenraum (Hohlraum 49) hinein, welcher zur Umgebung hin abgeschlossen (Figuren 2 und 3) oder belüftet (Figur 4) ist. Eine Verbindung zwischen dem Abströmkanal der Kolbenpumpe und dem Gegenraum besteht nicht. Die bekannte Pulsationsglättungseinrichtung baut relativ aufwändig und nimmt ein verhältnismäßig großes Bauvolumen ein. Ausgehend von diesem nächstliegenden Stand der Technik besteht die der Erfindung zugrundeliegende Aufgabe darin, die bekannte Pulsationglättungseinrichtung hinsichtlich ihrer Wirksamkeit und ihres Bauvolumens zu verbessern. Diese Aufgabe löst ein Gegenstand mit den Merkmalen des Anspruchs 1.

Aus der JP 2001 001885 A ist eine Kolbenpumpe bekannt, deren Auslaßventilsitz an einem axial beweglichen Kolben ausgebildet ist. Dieser Kolben ist von einer Feder in Richtung der Laufbuchse des Pumpenkolbens beaufschlagt und bildet ein nichtnachgiebiges, starres Bauteil. Mit einer Bewegung des Kolbens aufgrund von auftretenden Druckpulsationen ändert sich nachteiligerweise die Position des Auslaßventilsitzes und damit die Fördercharakteristik dieser Kolbenpumpe.

Die deutsche Offenlegungsschrift DE 42 26 646 Al zeigt eine hydraulische Fahrzeugbremsanlage mit einer Pumpe, bei der stromabwärts hinter einem Auslassrückschlagventil der Pumpe ein Druckdämpfer vorgesehen ist. Damit der in der Druckleitung vorgesehene Druckdämpfer eine ausreichende Wirkung aufweist, muss der Druckdämpfer entsprechend groß dimensioniert sein. Wegen dem Druckdämpfer baut die bekannte Fahrzeugbremsanlage ziemlich groß, und es ist ein erhöhter Herstellungsaufwand erforderlich. Beim Betätigen des Bremspedals wird ein Teil des über den Fahrerfuß verdrängten Druckmediums in den Druckdämpfer gedrückt. Weil der Druckdämpfer für eine ausreichende Wirkung relativ groß sein muss, muss bei einer Betätigung des Bremspedals relativ viel Druckmedium verdrängt werden, was durch entsprechendes Dimensionieren der an diesem Vorgang beteiligten Bauteile berücksichtigt werden muss. Dadurch baut die bekannte Bremsanlage ziemlich groß.

### Vorteile der Erfindung

Die erfindungsgemäße Kolbenpumpe mit den Merkmalen des Anspruchs 1 hat den Vorteil, daß die Pulsationsglättungseinrichtung die ansonsten bei einer Kolbenpumpe entstehenden Druckpulsationen und Druckwellen sehr wirkungsvoll beseitigt. Wegen der hohen Wirksamkeit der Pulsationsglättungseinrichtung kann diese ziemlich klein gebaut werden und trotzdem erhält man eine ausreichende Wirkung. Weil die Pulsationsglättungseinrichtung ziemlich klein gebaut werden kann, erhält man den Vorteil, daß die Kolbenpumpe insgesamt ziemlich baut. Dies hat den Vorteil einer insgesamt klein bauenden Fahrzeugbremsanlage. Weil die Pulsationsglättungseinrichtung aufgrund ihrer guten Wirksamkeit klein baut, insbesondere kann das Speichervolumen ziemlich klein gehalten werden, ergibt sich der Vorteil, daß bei einer Betätigung des Bremspedals von der Pulsationsglättungseinrichtung höchstens ein unwesentlicher Teil des vom Fahrerfuß unter Druck gesetzten Druckmediums aufgenommen wird, so daß von der Pulsationsglättungseinrichtung praktisch keine negative Auswirkung auf die Funktionsweise der Fahrzeugsbremsanlage während einer Betätigung des Bremspedals hervorgerufen wird.

Weil die Pulsationsglättungseinrichtung ziemlich klein baut, insbesondere, weil das Speichervolumen der Pulsationsglättungseinrichtung ziemlich klein gehalten werden kann, ist es vorteilhafterweise auch nicht erforderlich, daß stromabwärts hinter der Pulsationsglättungseinrichtung ein Rückschlagventil vorgesehen werden müßte. Aufgrund dieses nicht erforderlichen Rückschlagventils erhält man den Vorteil, daß der Herstellungsaufwand und die Baugröße der erfindungsgemäßen Fahrzeugbremsanlage klein gehalten werden kann; und man erhält den Vorteil, daß das nicht erforderlich zusätzliche Rückschlagventil auch nicht defekt werden kann.

Wegen der guten Dämpfung der Druckschwingungen durch die Pulsationsglättungseinrichtung erhält man den Vorteil, daß wesentlich weniger Geräusche entstehen und die Dauerhaltbarkeit der Kolbenpumpe ist wesentlich besser.

### Zeichnung

Die Zeichnung zeigt einen Ausschnitt eines Hydraulikblocks einer schlupfgeregelten Fahrzeugbremsanlage im Bereich einer Kolbenpumpe der Fahrzeugbremsanlage. Die Schnittebene verläuft als Längsschnitt durch die Kolbenpumpe.

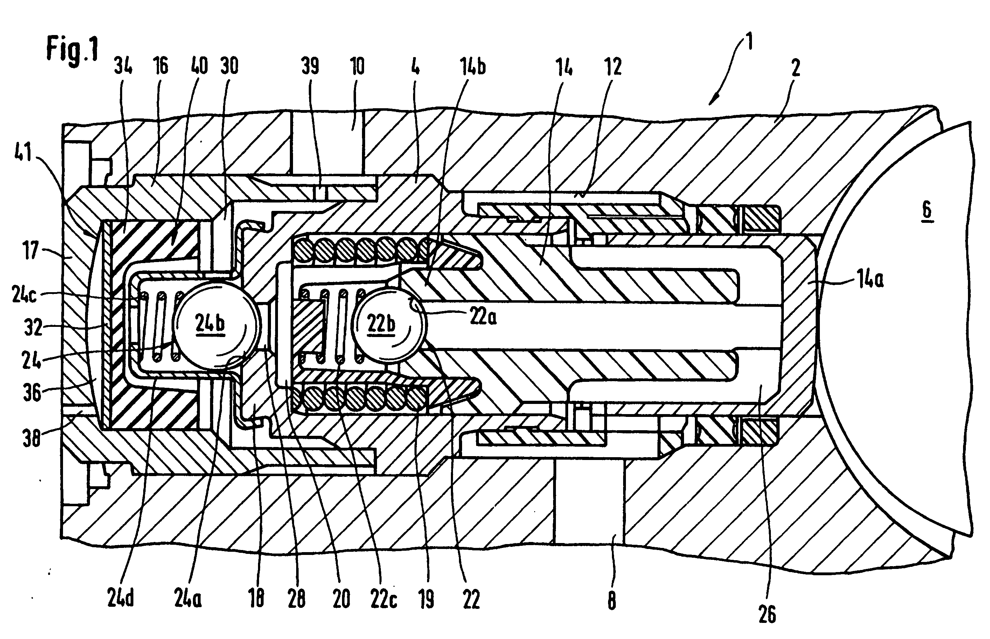

Figur 4 zeigt ein Ausfiihrungsbeispiel der Erfindung gemäß Anspruch 1, während die Figuren 1 bis 3 und 5 bis 10 einen Gegenstand nach Anspruch 1 nicht stützen und lediglich als Hintergrundinformation anzusehen sind.

### Beschreibung der Ausführungsbeispiele

Die Kolbenpumpe ist insbesondere als Pumpe in einer Bremsanlage eines Fahrzeugs vorgesehen und wird beim Steuern des Drucks in Radbremszylindern verwendet. Je nach Art der Bremsanlage werden für derartige Bremsanlagen die Kurzbezeichnungen ABS bzw. ASR bzw. FDR bzw. EHB verwendet. In der Bremsanlage dient die Pumpe beispielsweise zum Rückfördern von Bremsflüssigkeit aus einem Radbremszylinder oder aus mehreren Radbremszylindern in einen Hauptbremszylinder (ABS) und/oder zum Fördern von Bremsflüssigkeit aus einem Vorratsbehälter in einen Radbremszylinder oder in mehrere Radbremszylinder (ASR bzw. FDR bzw. EHB). Die Pumpe wird beispielsweise bei einer Bremsanlage mit einer Radschlupfregelung (ABS bzw. ASR) und/oder bei einer als Lenkhilfe dienenden Bremsanlage (FDR) und/oder bei einer elektrohydraulischen Bremsanlage (EHB) benötigt. Mit der Radschlupfregelung (ABS bzw. ASR) kann beispielsweise ein Blockieren der Räder des Fahrzeugs während eines Bremsvorgangs bei starkem Druck auf das Bremspedal (ABS) und/oder ein Durchdrehen der angetriebenen Räder des Fahrzeugs bei starkem Druck auf das Gaspedal (ASR) verhindert werden. Bei einer als Lenkhilfe (FDR) dienenden Bremsanlage wird unabhängig von einer Betätigung des Bremspedals bzw. Gaspedals ein Bremsdruck in einem oder in mehreren der Radbremszylinder aufgebaut, um beispielsweise ein Ausbrechen des Fahrzeugs aus der vom Fahrer gewünschten Spur zu verhindern. Die Pumpe kann auch bei einer elektrohydraulischen Bremsanlage (EHB) verwendet werden, bei der die Pumpe die Bremsflüssigkeit in den Radbremszylinder bzw. in die Radbremszylinder fördert, wenn ein elektrischer Bremspedalsensor eine Betätigung des Bremspedals erfaßt oder bei der die Pumpe zum Füllen eines Speichers der Bremsanlage dient.

Die **Figur 1** zeigt ein erstes, besonders vorteilhaftes, bevorzugt ausgewähltes Ausführungsbeispiel.

Die Figur 1 zeigt eine Kolbenpumpe 1. Die Kolbenpumpe 1 ist in einem ausschnittweise geschnitten dargestellten Hydraulikblock der Fahrzeugbremsanlage eingebaut. In dem Hydraulikblock können mehrere Kolbenpumpen 1 eingebaut sein. Der Hydraulikblock bildet ein Pumpengehäuse 2 der Kolbenpumpe 1. Die Kolbenpumpe 1 umfaßt eine in das Pumpengehäuse 2 eingesetzte Laufbuchse 4, einen Exzenter 6, einen Zulaufanschluß 8 und einen Abströmkanal 10. Der Zulaufanschluß 8 und der Abströmkanal 10 verlaufen durch den Hydraulikblock bzw. durch das Pumpengehäuse 2. Von dem Abströmkanal 10 führen nicht dargestellte, sich verzweigende Leitungen über nicht dargestellte Hydraulikventile zu einem nicht dargestellten Hauptbremszylinder und zu nicht dargestellten Radbremszylindern. In dem Pumpengehäuse 2 gibt es einen Einbauraum 12. Die Laufbuchse 4 und ein Pumpenkolben 14 sind in den Einbauraum 12 eingesetzt. Der Pumpenkolben 14 hat ein dem Exzenter 6 zugewandtes Ende 14a und ein dem Exzenter 6 abgewandtes Ende 14b. Der Pumpenkolben 14 wird über den Exzenter 6 abwechselnd aufeinanderfolgend zu einem Saughub und einem Druckhub angetrieben.

Der in dem Pumpengehäuse 2 vorgesehene Einbauraum 12 wird nach außen hin von einem Verschlußstück 16 abgeschlossen. Das Verschlußstück 16 hat einen nach außen gewandten stirnseitigen Verschlußstückboden 17. Die Laufbuchse 4 hat einen dem Verschlußstück 16 zugewandten stirnseitigen Laufbuchsenboden 18. Eine sich an dem Laufbuchsenboden 18 und an dem Pumpenkolben 14 abstützende Rückstellfeder 19 hält das Ende 14a des Pumpenkolbens 14 in Anlage an dem Exzenter 6. Zwischen dem Laufbuchsenboden 18 und dem dem Exzenter 6 abgewandten Ende 14b des Pumpenkolbens 14 gibt es einen sich während eines Saughubs vergrößernden und sich während eines Druckhubs verkleinernden Kompressionsraum 20.

Die Kolbenpumpe 1 hat ein Einlaßventil 22. Das Einlaßventil 22 hat einen Ventilsitz 22a, einen Schließkörper 22b und eine Schließfeder 22c. Die Schließfeder 22c beaufschlagt den Schließkörper 22b gegen den am Pumpenkolben 14 vorgesehenen Ventilsitz 22a.

Die Kolbenpumpe 1 hat ein Auslaßventil 24. Das Auslaßventil 24 hat einen Ventilsitz 24a, einen Schließkörper 24b, eine Schließfeder 22c und ein Halteelement 24d. Die Schließfeder 24c beaufschlagt den Schließkörper 24b gegen den gehäusefesten, beispielsweise am Laufbuchsenboden 18 vorgesehenen Ventilsitz 24a. Ein Ende der Schließfeder 24c stützt sich an dem Schließkörper 24a und ein Ende der Schließfeder 24c stützt sich an dem gehäusefesten Halteelement 24d ab. Das Halteelement 24d ist an dem Laufbuchsenboden 18 der Laufbuchse 4 befestigt. Das Halteelement 24d dient neben dem Abstützen der Schließfeder 24c auch zum Führen des Schließkörpers 24b. Das Halteelement 24d hat mindestens einen ausreichend groß dimensionierten Durchlaß, durch den das Druckmedium hindurch strömen kann.

Ein Zulaufdurchlaß 26 führt vom Zulaufanschluß 8 zum Einlaßventil 22. Ein Durchlaß 28 führt vom Kompressionsraum 20 durch den Laufbuchsenboden 18 zum Auslaßventil 24. Der Ventilsitz 24a umgibt den Durchlaß 28.

Auf der dem Durchlaß 28 abgewandten Seite des Schließkörpers 24b gibt es einen Abströmraum 30. Oder anders ausgedrückt, der Abströmraum 30 ist der Raum, der sich stromabwärts an den Ventilsitz 24a anschließt. In dem ausgewählten Ausführungsbeispiel befindet sich der Abströmraum 30 zwischen dem Laufbuchsenboden 18 und dem Verschlußstückboden 17 des Verschlußstücks 16. In dem Abströmraum 30 befinden sich die Schließfeder 24c und das Halteelement 24d.

Innerhalb des Einbauraums 12 ist eine elastisch nachgiebige Wand 32 eingebaut. Die elastisch nachgiebige Wand 32 befindet sich stromabwärts hinter dem Ventilsitz 24a unmittelbar im Bereich des Auslaßventils 24. Der Außenumfang der elastisch nachgiebigen Wand 32 ist innerhalb des Verschlußstücks 16 dicht und fest eingebaut. Die nachgiebige Wand 32 wird von dem im Abströmraum 30 herrschenden Druck beaufschlagt. Auf der dem Abströmraum 30 abgewandten Seite der nachgiebigen Wand 32 gibt es einen Gegenraum 36. Innerhalb des Gegenraums 36 ist beispielsweise ein Gas dicht eingespannt. Es ist aber auch möglich, daß der Gegenraum 36 über eine Öffnung 38 mit der Atmosphäre verbunden ist.

In dem Abströmraum 30, unmittelbar im Bereich des Auslaßventils 24, ist ein kompressibler Körper 34 eingebaut. Der kompressible Körper 34 wird einerseits von dem im Abströmraum 30 herrschenden Druck beaufschlagt, und andererseits stützt sich der kompressible Körper 34 überwiegend an der nachgiebigen Wand 32 ab. Der kompressible Körper 34 deckt die nachgiebige Wand 32 vollflächig ab. Am seinem Außenumfang dient der kompressible Körper 34 zusätzlich zur Abdichtung zwischen dem Abströmraum 30 und dem Gegenraum 36. Das Volumen des kompressiblen Körpers 34 ist so ausreichend groß dimensioniert, daß bei niederfrequenten Druckpulsationen in dem Abströmraum 30 sich das Volumen des kompressiblen Körpers 34 entsprechend den Druckpulsationen ändert, so daß die Druckpulsationen durch den kompressiblen Körper 34 aufgefangen und dadurch geglättet werden. Der kompressible Körper 34 ist vorzugsweise aus Gummi oder aus einem Elastomerwerkstoff hergestellt. Der kompressible Körper 34 hat vorzugsweise in sich kleinste gasgefüllte Hohlräume integriert, so daß bei Druckänderungen eine Volumenveränderung des kompressiblen Körpers 34 stattfinden kann.

Der kompressible Körper 34 besteht aus einem solchen Werkstoff, der ein druckabhängig veränderbares Volumen hat. Es wird ein Werkstoff gewählt, der bei der Veränderung seines Volumens durch innere Reibung einen Teil der Energie der Pulsationen dissipiert.

Die nachgiebige Wand 32 ist vorzugsweise eine relativ dünne plattenförmige Scheibe aus einem federnden Werkstoff, vorzugsweise Federstahl. Die Elastizität und Nachgiebigkeit der federnden, nachgiebigen Wand 32 ist so dimensioniert, daß bei hochfrequenten Druckpulsationen in dem Abströmraum 30, bei einer schlagartigen Druckerhöhung, die nachgiebige Wand 32 in Richtung des Gegenraums 36 ausweicht, und bei hochfrequentem schlagartigem Druckabsenken in dem Abströmraum 30 federt die nachgiebige Wand 32 zurück in Richtung des Abströmraums 30. Dadurch wird erreicht, daß hochfrequente Druckpulsationen unmittelbar im Bereich kurz hinter dem Ventilsitz 24a geglättet werden.

Der Abströmraum 30 ist über eine Drossel 39 mit dem Abströmkanal 10 verbunden. Die Drossel 39 ist im Bereich des Auslaßventils 24 nahe am Auslaßventil 24 angeordnet. Mit Hilfe der Drossel 39 wird erreicht, daß die im Bereich des Auslaßventils 24 auftretenden Druckpulsationen innerhalb des Abströmraums 30 auf die nachgiebige Wand 32 und auf den kompressiblen Körper 34 konzentriert einwirken. Durch die nachgiebige Wand 32 und durch den kompressiblen Körper 34 werden Druckpulsationen am Entstehen gehindert, unmittelbar dort wo die Pulsationen entstehen würden, so daß sie sich nicht über die Drossel 39 hinaus in den Abströmkanal 10 fortpflanzen können.

Bei dem in der Figur 1 dargestellten Ausführungsbeispiel bilden die Form des Abströmraums 30, die elastisch nachgiebige Wand 32, der kompressible Körper 34, der Gegenraum 36 und die Drossel 39 im Zusammenspiel miteinander eine hochwirksame, effektive Pulsationsglättungseinrichtung 40. Die Bauteile der Pulsationsglättungseinrichtung 40 sind vorzugsweise unmittelbar im Bereich des Auslaßventils 24 angeordnet. Dadurch kann die hydraulische Nachgiebigkeit der Pulsationsglättungseinrichtung 40 relativ klein gehalten werden. Dies hat den Vorteil, daß trotz sehr guter Pulsationsglättung das hydraulische System in dem Abströmkanal 10 auch ohne Verwendung eines zusätzlichen Rückschlagventils stromabwärts hinter der Pulsationsglättungseinrichtung 40 ziemlich steif gehalten werden kann.

Durch Einbauen der Wand 32, des Körpers 34 und des Gegenraums 36 in das Verschlußstück 16 erhält man den Vorteil, daß insgesamt wenig Bauteile benötigt werden und daß der Zusammenbau der Kolbenpumpe 1 ohne Mehraufwand geschehen kann. Das Verschlußstück 16 ist über eine an sich bekannte Bördelverbindung druckdicht in den Einbauraum eingebaut. Das Verschlußstück 16 dichtet den Hochdruckbereich der Kolbenpumpe 1 nach außen ab.

Die **Figur 2** zeigt ein weiteres, besonders vorteilhaftes, bevorzugt ausgewähltes Ausführungsbeispiel.

In allen Figuren sind gleiche oder gleichwirkende Teile mit denselben Bezugszeichen versehen. Sofern nichts Gegenteiliges erwähnt bzw. in der Zeichnung dargestellt ist, gilt das anhand eines der Figuren Erwähnte und Dargestellte auch bei den anderen Figuren. Sofern sich aus den Erläuterungen nichts anderes ergibt, sind die Einzelheiten der einzelnen Ausführungsbeispiele und der verschiedenen Figuren miteinander kombinierbar.

Bei dem in der Figur 2 bevorzugt dargestellten Ausführungsbeispiel ist ein Halteelement 42 in das Verschlußstück 16 eingepresst. Das Halteelement 42 hält die nachgiebige Wand 32 in Anlage an einem an dem Verschlußstück 16 vorgesehenen Absatz 44. Zwischen einer ringförmigen Stirnfläche 46 des Halteelements 42 und der nachgiebigen Wand 32 ist ein kompressibler Ringkörper 48 eingebaut. Der kompressible Ringkörper 48 dient zur Abdichtung zwischen dem Abströmraum 30 und dem Gegenraum 36. Für den Ringkörper 48 kann ein gleiches Material wie für den kompressiblen Körper 34 verwendet werden.

Bei niederfrequenten Druckpulsationen in dem Abströmraum 30 wird der kompressible Ringkörper 48 bei Druckerhöhung radial nach außen komprimiert und bei niederfrequenten Druckabsenkungen federt der Ringkörper 48 radial nach innen zurück. Dadurch werden niederfrequente Druckpulsationen unmittelbar in dem Abströmraum 30 beseitigt oder zumindest erheblich gedämpft.

Bei dem in der Figur 2 dargestellten Ausführungsbeispiel bilden die Form des Abströmraums 30, die druckabhängig elastisch nachgiebige Wand 32, der kompressible Ringkörper 48, der Gegenraum 36 und die Drossel 39 im Zusammenspiel miteinander die hochwirksame, effektive Pulsationsglättungseinrichtung 40. Die Bauteile der Pulsationsglättungseinrichtung 40 sind vorzugsweise unmittelbar im Bereich des Auslaßventils 24 angeordnet.

Die **Figur 3** zeigt ein weiteres, besonders vorteilhaftes, bevorzugt ausgewähltes Ausführungsbeispiel.

Die nachgiebige Wand 32 kann beispielsweise, wie in der Figur 2 gezeigt, aus einer einzigen federelastischen Platte bestehen. Die nachgiebige Wand 32 kann aber auch vorzugsweise, wie in der Figur 3 dargestellt, aus einer ersten federelastischen Platte 32a und einer zweiten federelastischen Platte 32b zusammengesetzt sein. Es ist aber auch möglich, das Ausführungsbeispiel so abzuwandeln, daß die nachgiebige Wand 32 aus drei flach aneinander anliegenden, vorzugsweise etwas zusammengepreßten Platten oder aus vier oder aus mehr Platten zusammengesetzt ist. Die hier mindestens zwei federelastischen Platten 32a, 32b sind so zusammengesetzt, daß zwischen ihnen eine Reibeinrichtung 49 entsteht.

Bei hochfrequenten Druckpulsationen in dem Abströmraum 30 federt die nachgiebige Wand 32 in Richtung des Gegenraums 36 bzw. zurück in Richtung des Abströmraums 30. Dadurch entsteht eine Durchbiegung der nachgiebigen Wand 32. Aufgrund dieser Durchbiegung verschieben sich die federelastischen Platten 32a und 32b gegeneinander. Dadurch entsteht zwischen den Platten 32a, 32b eine Relativbewegung und aufgrund der Reibung entsteht eine Dämpfung. Dadurch ergibt sich eine besonders effektive Dämpfung der hochfrequenten Druckpulsationen in dem Abströmraum 30.

Bei dem in der Figur 3 dargestellten Ausführungsbeispiel bilden die Form des Abströmraums 30, die elastisch nachgiebige Wand 32, die Drossel 39, der Ringkörper 48, der Gegenraum 36 und die Reibeinrichtung 49 im Zusammenspiel miteinander die hochwirksame, effektive Pulsationsglättungseinrichtung 40. Die Bauteile der Pulsationsglättungseinrichtung 40 sind vorzugsweise unmittelbar im Bereich des Auslaßventils 24 angeordnet.

Es sei nebenbei darauf hingewiesen, daß die Reibeinrichtung 49 auch bei den in den anderen Figuren dargestellten Ausführungsbeispielen eingebaut werden kann. Insbesondere kann auch in den Figuren 1, 2, 4, 6 und 7 die zwecks Bildung der Reibeinrichtung 49 vorgesehene elastisch nachgiebige Wand 32 aus mehreren aneinander anliegenden und gegeneinander reibenden Platten zusammengesetzt sein.

Die Figur 4 zeigt einen Längsschnitt durch ein weiteres, bevorzugt ausgewähltes, besonders vorteilhaftes Ausführungsbeispiel.

Bei dem in der Figur 4 dargestellten Ausführungsbeispiel hat die elastisch nachgiebige Wand 32 in etwa die Form eines Zylinderhutes. Der Außenrand der elastisch nachgiebigen Wand 32 ist in das Verschlußstück 16 eingepresst. Der Gegenraum 36 ist über eine Verbindung 51 mit dem Abströmkanal 10 verbunden. Der Querschnitt der Verbindung 51 ist so dimensioniert, daß in dieser Verbindung 51 der Druckmedium-Strom etwas gedrosselt wird. Die Verbindung 51 hat eine Verbindungsdrossel 51a. Die Drosselwirkung der Drossel 39 ist jedoch vorzugsweise wesentlich stärker als die Drosselwirkung der Verbindungsdrossel 51a.

Bei Druckpulsationen in dem Abströmraum 30 ergibt sich eine elastische Verformung der Wand 32. Bei der elastischen Verformung der Wand 32 wird ein Teil der Energie bei Druckpulsationen von der nachgiebigen Wand 32 aufgefangen. Dadurch werden die Druckpulsationen wesentlich geschwächt und können sich nicht bzw. nur wesentlich geschwächt über die Drossel 39 hinaus in den Abströmkanal 10 fortpflanzen. Die bis zum Abströmkanal 10 gelangenden wesentlich geschwächten Druckpulsationen wirken durch die Verbindung 51 bis zum Gegenraum 36. Aufgrund der Weglänge und wegen der Drossel 39 sowie wegen der eventuellen Verbindungsdrossel 51a in der Verbindung 51 gelangen die Druckpulsationen phasenverschoben zu den Druckpulsationen im Abströmraum 30 in den Gegenraum 36. Dadurch wird die elastische Durchbiegung der nachgiebigen Wand 32 verstärkt, so daß sich, aufgrund der gegenphasigen Druckpulsationen in dem Gegenraum 36, ein besonders effektiver Abbau von Druckpulsationen im Abströmraum 30 ergibt. Dadurch werden die Druckpulsationen besonders effektiv abgebaut und man erhält in dem Abströmkanal 10 einen sehr gleichmäßigen Druckmedium-Strom.

Bei dem in der Figur 4 dargestellten Ausführungsbeispiel bilden die Form des Abströmraums 30, die elastisch nachgiebige Wand 32, der Gegenraum 36, die Drossel 39 und die den Gegenraum 36 mit dem Abströmkanal 10 verbindende Verbindung 51 im Zusammenspiel miteinander die hochwirksame, effektive Pulsationsglättungseinrichtung 40. Die Bauteile der Pulsationsglättungseinrichtung 40 sind vorzugsweise unmittelbar im Bereich des Auslaßventils 24 angeordnet.

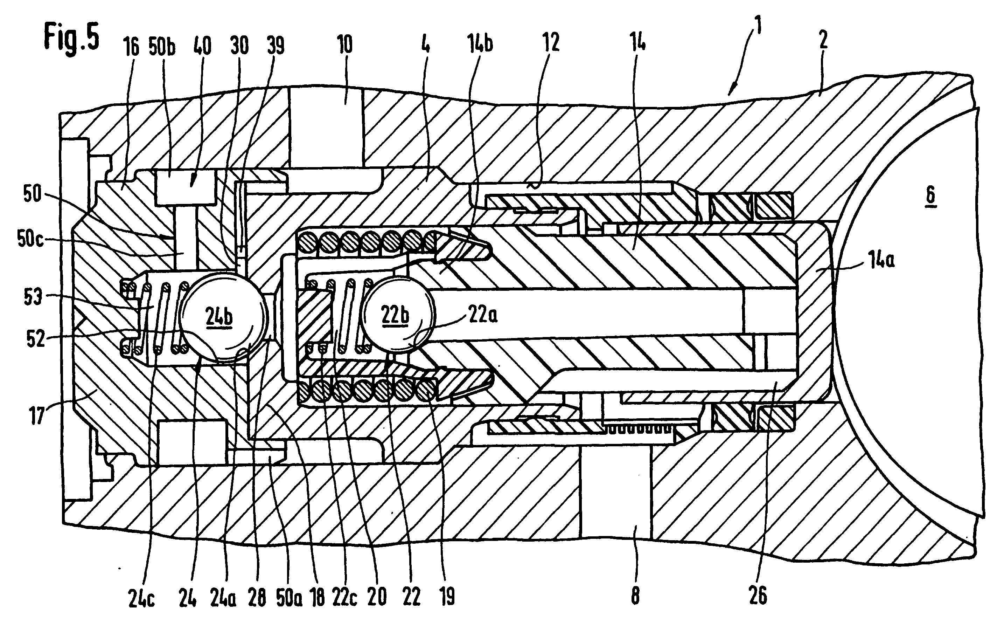

Die **Figur 5** zeigt ein weiteres, ausgewähltes, besonders vorteilhaftes Ausführungsbeispiel.

Das Auslaßventils 24 hat auf der dem Durchlaß 28 abgewandten Seite des Schließkörpers 24b einen rückwärtigen Ventilraum 53.

Bei dem in der Figur 5 gezeigten Ausführungsbeispiel wird der kugelförmige Schließkörper 24b des Auslaßventils 24 an einer Engstelle im Verschlußstück 16 in Öffnungsrichtung geführt. Die Engstelle zwischen dem Schließkörper 24b und dem Verschlußstück 16 ist so eng, daß zwischen dem rückwärtigen Ventilraum 53 und dem Abströmraum 30 höchstens eine unwesentliche, vernachlässigbar kleine Strömungsverbindung besteht. Weil die Engstelle den Abströmraum 30 gegenüber dem rückwärtigen Ventilraum 53 trennt, wird diese Engstelle nachfolgend als Trennstelle 52 bezeichnet.

Ein Durchlaß 50 verbindet den Abströmkanal 10 mit dem rückwärtigen Ventilraum 53.

Bei dem bevorzugt ausgewählten Ausführungsbeispiel setzt sich der Durchlaß 50 zusammen aus einer Längsnut 50a oder aus mehreren Längsnuten 50a, aus einer Umfangsnut 50b und aus einem Radialloch 50c oder aus mehreren Radiallöchern 50c. Die Umfangsnut 50b ist über die mindestens eine Längsnut 50a mit dem Abströmkanal 10 und über das mindestens eine Radialloch 50c mit dem rückwärtigen Ventilraum 53 verbunden. Bei einem Schwingen des Schließkörpers 24b, was eventuell zu einer Druckpulsation im Abströmraum 30 führen könnte, führt dazu, daß Druckmedium zwischen dem rückwärtigen Ventilraum 53 und dem Abströmkanal 10 ausgetauscht wird. Dabei strömt das Druckmedium durch den mehrfach abgewinkelten Durchlaß 50. Wegen diesen Abwinkelungen ergibt sich ein vorteilhafter Widerstand, der dafür sorgt, daß sich in dem rückwärtigen Ventilraum 53 einem Schwingen des Schließkörpers 24b entgegengerichtete Druckschwingungen aufbauen, die für ein effektives Dämpfen der Schwingungen des Schließkörpers 24b sorgen. Dadurch, insbesondere auch in Zusammenarbeit mit der Drossel 39 zwischen dem Abströmkanal 10 und dem Abströmraum 30, wird dafür gesorgt, daß eventuelle Druckpulsationen wirkungsvoll gemindert werden, insbesondere daß eventuelle Druckpulsationen nicht bis in den Abströmkanal 10 gelangen.

Zwischen dem Abströmraum 30 und dem Abströmkanal 10 wird vorzugsweise die Drossel 39 vorgesehen, die zusätzlich zu einer Glättung von Druckpulsationen beiträgt. Besonders pulsationsdämpfend wirkt die Drossel 39, wenn diese ziemlich dicht im Bereich des Ventilsitzes 24a angeordnet ist.

Bei dem in der Figur 5 dargestellten Ausführungsbeispiel bilden die Form des Abströmraums 30, der rückwärtige Ventilraum 53, die Drossel 39 und der Durchlaß 50 im Zusammenspiel miteinander die hochwirksame, effektive Pulsationsglättungseinrichtung 40. Die Bauteile der Pulsationsglättungseinrichtung 40 sind vorzugsweise unmittelbar im Bereich des Auslaßventils 24 angeordnet.

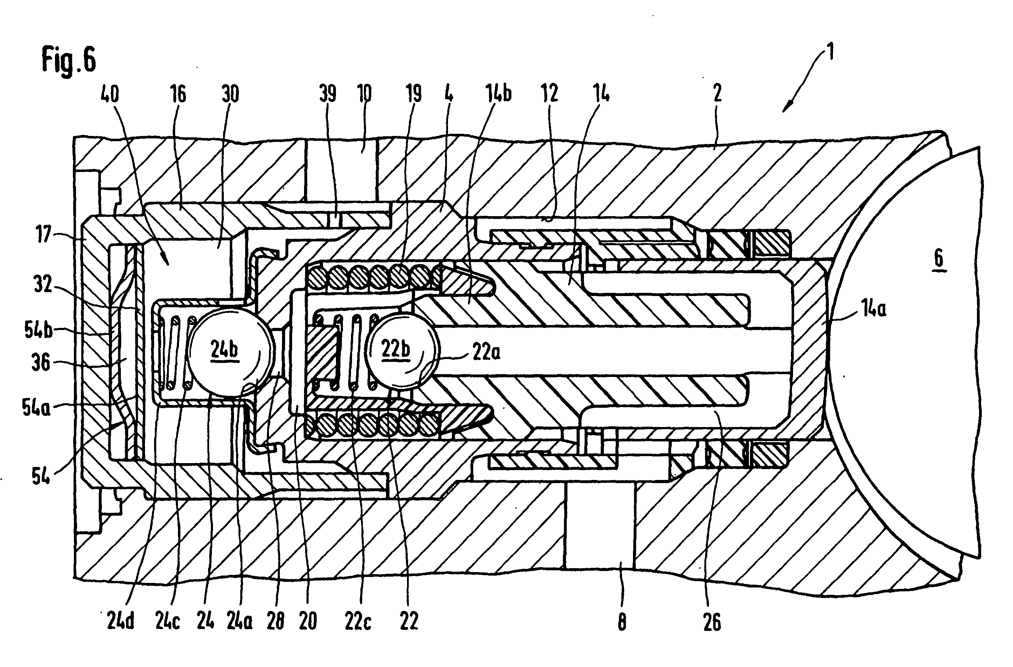

Die **Figur 6** zeigt ein weiteres, bevorzugt ausgewähltes, besonders vorteilhaftes Ausführungsbeispiel.

Bei dem in Figur 6 dargestellten Ausführungsbeispiel ist eine Druckdose 54 in das Innere des Verschlußstücks 16 und damit in den Einbauraum 12 eingesetzt. Die bevorzugt dargestellte Druckdose 54 besteht beispielhaft aus einer ersten Wand 54a und aus einer zweiten Wand 54b. Die beiden Wände 54a, 54b sind an ihrem Umfang druckdicht miteinander verbunden, vorzugsweise zusammengeschweißt. Dadurch ist bei diesem Ausführungsbeispiel der Gegenraum 36 zwischen den beiden Wänden 54a, 54b hermetisch nach außen hin abgedichtet. In dem Gegenraum 36 befindet sich vorzugsweise ein leicht kompremierbares Gas, beispielsweise Luft. Die Druckdose 54 ist kostengünstig herstellbar und gewährleistet dauerhaft ein dichtes Einschließen eines Gasvolumens.

Die dem Abströmraum 30 zugewandte erste Wand 54a bildet die elastisch nachgiebige Wand 32. Wegen der elastisch nachgiebigen Wand 32 vergrößert sich der Abströmraum 30 bei Druckpulsationen während eines Druckanstiegs etwas, so daß der Druckanstieg wesentlich weniger heftig ist, als wenn die elastisch nachgiebige Wand 32 nicht vorhanden wäre. Während eines Druckabfalls federt die elastisch gespannte Wand 32 zurück in Richtung des Abströmraums 30, so daß der Druckabfall in dem Abströmraum 30 nicht so heftig ist, wie wenn die elastisch nachgiebige Wand 32 nicht vorhanden wäre. Die Drossel 39 sorgt dafür, daß sich die Druckschwingungen im wesentlichen auf den Abströmraum 30 beschränken, wo aufgrund der elastisch nachgiebigen Wand 32 ein effektives Glätten der Druckschwingungen erfolgt. Dadurch wird erreicht, daß in dem Abströmkanal 10 eine Strömung mit effektiv geglätteten Druckschwingungen vorhanden ist.

Auch bei diesem Ausführungsbeispiel kann, wie in der Figur 2 dargestellt, eine Schwingungen zusätzlich dämpfende Reibeinrichtung vorgesehen werden, beispielsweise dadurch, daß man die erste Wand 54a aus zwei aneinanderliegenden Platten zusammensetzt.

Bei dem in der Figur 6 dargestellten Ausführungsbeispiel bilden die Form des Abströmraums 30, die elastisch nachgiebige Wand 32, der Gegenraum 36, die Drossel 39 und die Druckdose 54 im Zusammenspiel miteinander die hochwirksame, effektive Pulsationsglättungseinrichtung 40. Die Bauteile der Pulsationsglättungseinrichtung 40 sind vorzugsweise unmittelbar im Bereich des Auslaßventils 24 angeordnet.

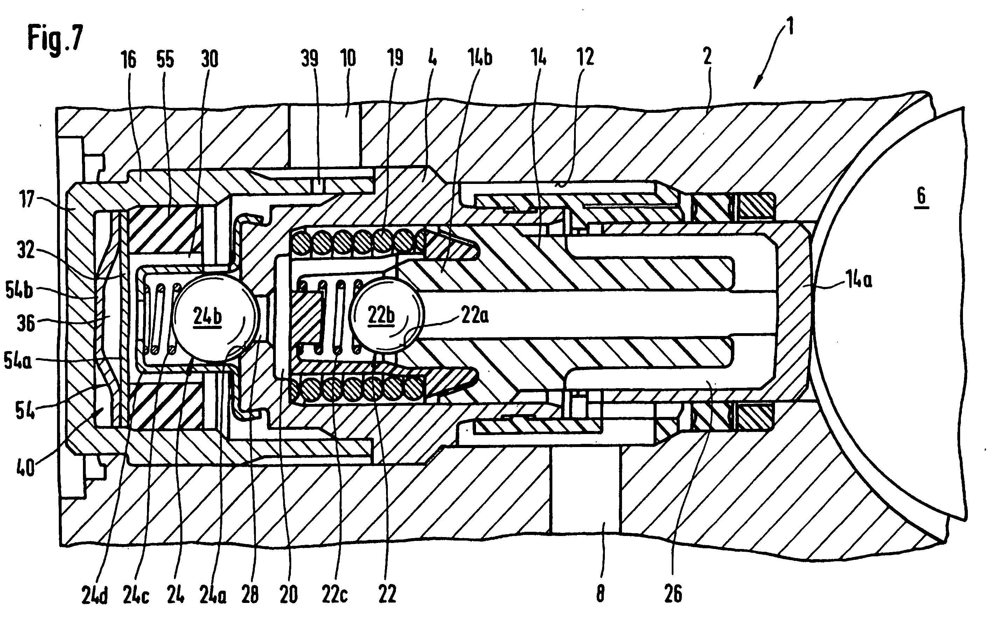

Die **Figur 7** zeigt ein weiteres, bevorzugt ausgewähltes, besonders vorteilhaftes Ausführungsbeispiel.

Die Figur 7 unterscheidet sich gegenüber der Figur 6 durch einen kompressiblen, Schwingungen dämpfenden Körper 55.

Es hat sich gezeigt, daß durch Einbauen des kompressiblen Körpers 55 in den Abströmraum 30 Druckpulsationen noch besser geglättet werden. Besonders wirkungsvoll ist der kompressible Körper 55, wenn dieser abströmseitig so nah wie möglich, unmittelbar im Bereich des Auslaßventils 24 angeordnet ist. Durch Einsetzten des in der Figur 7 dargestellten, kompressiblen Körpers 55 in den Abströmraum 30 erhält man eine zusätzliche Kompressibilität im Abströmraum 30. Dadurch kann trotz Einsetzens des kompressiblen Körpers 55 in den Abströmraum 30 die Baugröße insgesamt wesentlich kleiner gehalten werden als ohne den kompressiblen Körper 55 bzw. man erhält eine wesentlich bessere Glättung der Druckpulsationen.

Bei dem in der Figur 7 dargestellten Ausführungsbeispiel bilden die Form des Abströmraums 30, die elastisch nachgiebige Wand 32, der Gegenraum 36, die Drossel 39, die Druckdose 54 und der kompressible Körper 55 im Zusammenspiel miteinander die hochwirksame, effektive Pulsationsglättungseinrichtung 40. Die Bauteile der Pulsationsglättungseinrichtung 40 sind vorzugsweise abströmseitig unmittelbar im Bereich des Auslaßventils 24 angeordnet.

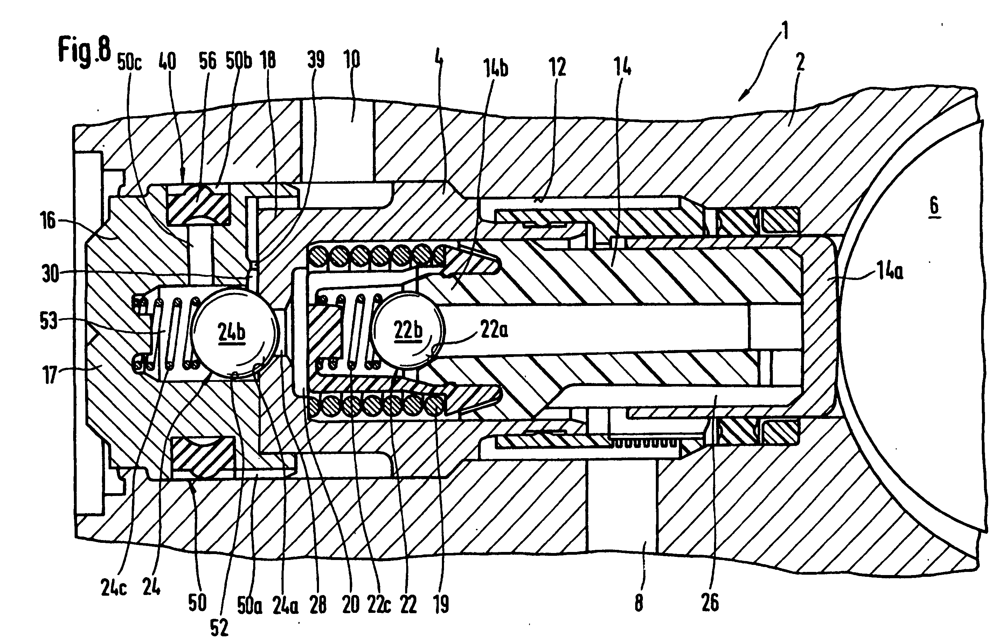

Die **Figur 8** zeigt ein weiteres, bevorzugt ausgewähltes, besonders vorteilhaftes Ausführungsbeispiel.

Das in der Figur 8 dargestellte Ausführungsbeispiel entspricht bis auf die nachfolgend genannten Unterschiede weitgehend den in den anderen Figuren dargestellten Ausführungsbeispielen. Insbesondere aber entspricht die in der Figur 8 gezeigte Kolbenpumpe weitgehend der in der Figur 5 dargestellten Kolbenpumpe.

Bei dem in der Figur 8 dargestellten Ausführungsbeispiel ist in die Umfangsnut 50b des Durchlasses 50 eine nachgiebige Wand 56 dichtend eingesetzt. Aufgrund der elastischen Verformung der nachgiebigen Wand 56, hervorgerufen durch Druckpulsationen in dem rückwärtigen Ventilraum 53 aufgrund von Schwingungen des Schließkörpers 24b ergibt sich eine Dämpfung der in dem rückwärtigen Ventilraum 53 entstehenden Druckschwingungen. Dadurch ergibt sich eine Beruhigung der Schwingungen des Schließkörpers 24b. Dadurch wird auch der durch das Auslaßventil 24 und durch den Abströmraum 30 in den Abströmkanal 10 strömende Druckmedium-Strom beruhigt, so daß insgesamt wesentlich weniger starke Druckschwingungen auftreten.

Bei dem in der Figur 8 dargestellten Ausführungsbeispiel bilden die Form des Abströmraums 30, die Drossel 39, der Durchlaß 50, der rückwärtige Ventilraum 53 und die dämpfend nachgiebige Wand 56 im Zusammenspiel miteinander die hochwirksame, effektive Pulsationsglättungseinrichtung 40. Die Bauteile der Pulsationsglättungseinrichtung 40 sind vorzugsweise abströmseitig unmittelbar im Bereich des Auslaßventils 24 angeordnet.

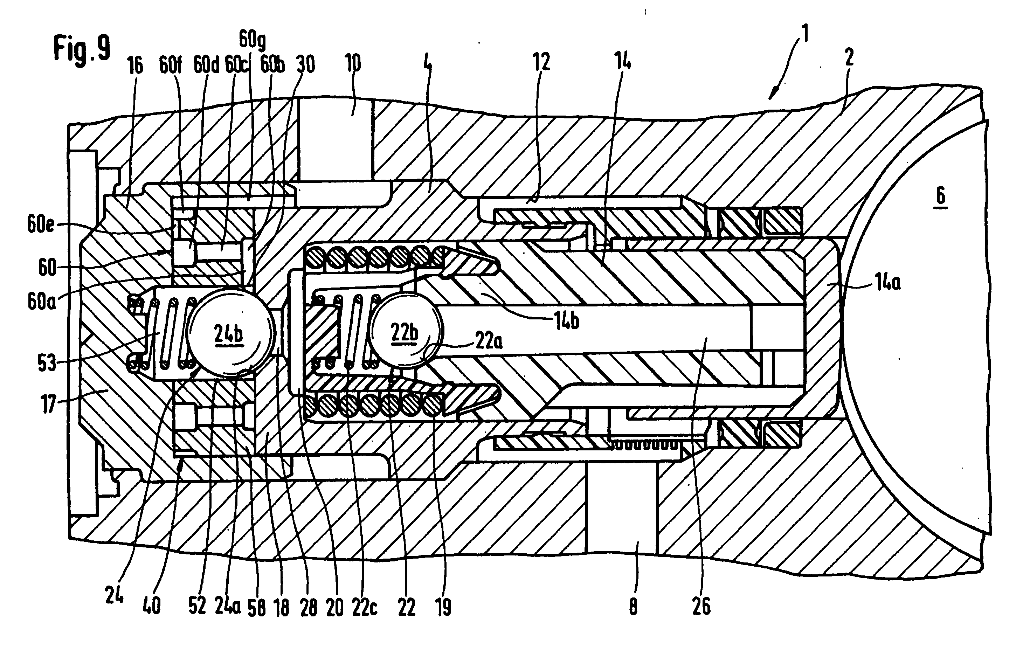

Die **Figur 9** zeigt ein weiteres, bevorzugt ausgewähltes, besonders vorteilhaftes Ausführungsbeispiel.

Die in der Figur 9 beispielhaft dargestellte Kolbenpumpe 1 entspricht bis auf die dargestellten Unterschiede im wesentlichen der in den anderen Figuren beispielhaft gezeigten Kolbenpumpen 1.

Bei dem in der Figur 9 dargestellten Ausführungsbeispiel ist in den Einbauraum 12, zwischen dem Verschlußstückboden 17 und dem Laufbuchsenboden 18, ein Einsatz 58 eingebaut.

Zwischen dem Abströmraum 30 und dem Abströmkanal 10 ist eine Verwirbelungsdrosselung 60 vorgesehen. Das vom Auslaßventil 24 durch den Abströmraum 30 zum Abströmkanal 10 strömende Druckmedium muß durch die Verwirbelungsdrosselung 60 hindurch. Beginnend am Abströmraum 30, besteht die Verwirbelungsdrosselung 60 beispielsweise aus einer am Einsatz 58 vorgesehenen Radialnut 60a oder aus mehreren Radialnuten 60a, aus einer am Einsatz 58 angebrachten Umfangsnut 60b, aus einem im Einsatz 58 angebrachten Längsloch 60c oder aus mehreren Längslöchern 60c, aus einer zweiten Umfangsnut 60d, aus einem Radialkanal 60e oder aus mehreren Radialkanälen 60e, aus einer dritten Umfangsnut 60f und aus einem Längskanal 60g oder aus mehreren Längskanälen 60g. Die mindestens eine Radialnut 60a und die Umfangsnut 60b befinden sich auf der dem Laufbuchsenboden 18 zugewandten Stirnseite des Einsatzes 58. Die zweite Umfangsnut 60d, der mindestens eine Radialkanal 60e und die dritte Umfangsnut 60f befinden sich in der dem Verschlußstückboden 17 zugewandten Stirnseite des Einsatzes 58. Der mindestens eine Längskanal 60g ist vorzugsweise an einer Innenumfangsfläche des Verschlußstücks 16 eingearbeitet. Die mindestens eine Radialnut 60a verbindet den Abströmraum 30 mit der Umfangsnut 60b. Das mindestens eine Längsloch 60c verbindet die beiden Umfangsnuten 60b, 60d miteinander. Der mindestens eine Radialkanal 60e verbindet die beiden Umfangsnuten 60d, 60f miteinander. Der mindestens eine Längskanal 60g verbindet die dritte Umfangsnut 60f mit dem Abströmkanal 10.

Aufgrund der vielfachen Umlenkung des durch die Verwirbelungsdrosselung 60 hindurchströmenden Druckmedium-Stroms und weil die Verwirbelungsdrosselung 60 im Verlauf der Strömungsstrecke sehr unterschiedliche Querschnitte hat, und dadurch der Druckmedium-Strom mit sehr unterschiedlichen Strömungsgeschwindigkeiten und Richtungen und plötzlichen Ablenkungen hindurchströmen muß, ergibt sich insgesamt eine deutliche Verringerung von Pulsationen innerhalb des vom Auslaßventil 24 in den Abströmkanal 10 strömenden Druckmediums-Stroms, bzw. es wird dafür gesorgt, daß weitgehend keine Druckpulsationen entstehen können.

Die wesentlichen Teile der Verwirbelungsdrosselung 60 befinden sich am leicht herstellbaren Einsatz 58 beziehungsweise im leicht herstellbaren Einsatz 58. Dies hat den Vorteil, daß trotz der Verwirbelungsdrosselung 60 an den übrigen Teilen der Kolbenpumpe 1 keine aufwendigen Bearbeitungen notwendig sind.

Der rückwärtige Ventilraum 53 ist nur über die sehr wenig beziehungsweise praktisch kein Druckmedium durchlassende Trennstelle 52 mit dem Abströmraum 30 verbunden. Bei einem Schwingen des Schließkörpers 24b entstehen in dem rückwärtigen Ventilraum 53 Druckschwingungen, die einem Schwingen des Schließkörpers 24b unmittelbar entgegengerichtet sind. Dadurch entsteht eine deutliche Beruhigung der Schwingungen des Schließkörpers 24b. Dies führt zu einem wesentlichen Vergleichmäßigen der hydraulischen Strömung aus dem Abströmraum 30 in den Abströmkanal 10.

Bei dem in der Figur 9 dargestellten Ausführungsbeispiel bilden die Form des Abströmraums 30, der rückwärtige Ventilraum 53, die Trennstelle 52 und die Verwirbelungsdrosselung 60 zusammen die hochwirksame, effektive Pulsationsglättungseinrichtung 40. Die Bauteile der Pulsationsglättungseinrichtung 40 sind vorzugsweise abströmseitig unmittelbar im Bereich des Auslaßventils 24 angeordnet.

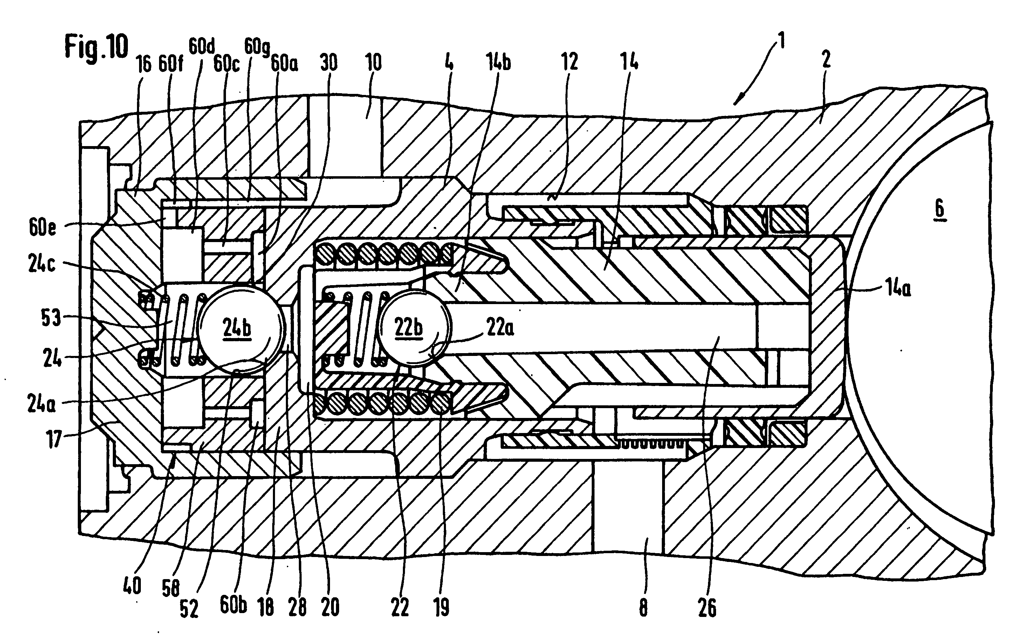

Die **Figur 10** zeigt ein weiteres, bevorzugt ausgewähltes, besonders vorteilhaftes Ausführungsbeispiel.

Bis auf die dargestellten oder nachfolgend erwähnten Unterschiede entspricht die in den Figur 10 dargestellte Kolbenpumpe 1 im wesentlichen den in den anderen Figuren dargestellten Kolbenpumpen 1. Insbesondere entspricht die in der Figur 10 gezeigte Kolbenpumpe 1 weitgehend der in der Figur 9 gezeigten Kolbenpumpe 1.

Bei dem in der Figur 10 dargestellten Ausführungsbeispiel ist die Umfangsnut 60d der Verwirbelungsdrosselung 60 radial nach innen so weit aufgeweitet, daß die Umfangsnut 60d in den rückwärtigen Ventilraum 53 übergeht. Dadurch wird erreicht, daß das durch die Verwirbelungsdrosselung 60 hindurchströmende Druckmedium beruhigt wird und das teilweise beruhigte Druckmedium wirkt in dem rückwärtigen Ventilraum 53 auf der dem Durchlaß 28 abgewandten Seite des Schließkörpers 24b, auf den Schließkörper 24. Durch den durch die Verwirbelungsdrosselung 60 teilweise beruhigten Druckmediums-Strom ergibt sich eine wesentliche Dämpfung der Schwingungen des Schließkörpers 24b. Beim Weiterströmen des Druckmediums aus der Umfangsnut 60d in Richtung des Abströmkanals 10 erfolgt dann eine weitere zusätzliche Beruhigung des Druckmedium-Stroms und ein weiterer Abbau von Druckspitzen.

Bei dem in der Figur 10 dargestellten Ausführungsbeispiel bilden die Form des Abströmraums 30, der rückwärtige Ventilraum 53, die Trennstelle 52, die Verwirbelungsdrosselung 60 und das hydraulische Verbinden des rückwärtigen Ventilraums 53 mit der Verwirbelungsdrosselung 60 die hochwirksame, effektive Pulsationsglättungseinrichtung 40. Die Bauteile der Pulsationsglättungseinrichtung 40 sind vorzugsweise abströmseitig unmittelbar im Bereich des Auslaßventils 24 angeordnet.

## Patentansprüche

1. Kolbenpumpe mit einem in einem Pumpengehäuse (2) verschiebbar gelagerten Pumpenkolben (14), mit einem Einlaßventil (22), mit einem Auslaßventil (24) und mit einem zwischen dem Einlaßventil (22) und dem Auslaßventil (24) in dem Pumpengehäuse (2) vorgesehenen Kompressionsraum (20), der sich bei einem Saughub des Pumpenkolbens (14) vergrößert und bei einem Druckhub des Pumpenkolbens (14) verkleinert und mit einer im Bereich des Auslassventils angeordneten Pulsationsglättungseinrichtung (40), die einen dem Auslassventil (24) zugeordneten Abströmraum (30), eine stromabwärts hinter dem Abströmraum (30) vorgesehene Drossel (39), eine den Abströmraum (30) begrenzende nachgiebige Wand (32) und einen Gegenraum (36) umfasst, der auf der dem Abströmraum (30) abgewandten Seite der nachgiebigen Wand (32) angeordnet ist, **dadurch gekennzeichnet, dass** ein Abströmkanal (10) der Kolbenpumpe (1) stromabwärts hinter der Drossel (39) über eine Verbindung (51) mit dem Gegenraum (36) verbunden ist.

2. Kolbenpumpe nach Anspruch 1, **dadurch gekennzeichnet, dass**
die Pulsationsglättungseinrichtung (40) räumlich unmittelbar im Bereich des Auslaßventils (24) angeordnet ist.

3. Kolbenpumpe nach Anspruch 1 oder 2, **dadurch gekennzeichnet, dass** in dem Abströmraum (30) ein kompressibler Körper (34, 48, 55) vorgesehen ist.

4. Kolbenpumpe nach Anspruch 1 oder 2, **dadurch gekennzeichnet, dass** in dem Abströmraum (30) ein dämpfender Körper (34, 48, 55) vorgesehen ist.

5. Kolbenpumpe nach einem der Ansprüche 1 bis 4, **dadurch gekennzeichnet, dass** zwischen dem Abströmkanal (10) und dem Gegenraum (36) eine Verbindungsdrossel (51a) angeordnet ist.

6. Kolbenpumpe nach einem der Ansprüche 1 bis 5, **dadurch gekennzeichnet, dass** zwischen dem Abströmraum (30) und dem Abströmkanal (10) eine Verwirbelungsdrosselung (60) angeordnet ist.

## Claims

1. Piston pump, with a pump piston (14) mounted displaceably in a pump casing (2), with an inlet valve (22), with an outlet valve (24) and with a compression space (20) which is provided in the pump casing (2) between the inlet valve (22) and the outlet valve (24) and which increases in size during a suction stroke of the pump piston (14) and decreases in size during a delivery stroke of the pump piston (14), and also with a pulsation smoothing device (40) which is arranged in the region of the outlet valve and which comprises an outflow space (30) assigned to the outlet valve (24), a throttle (39) provided behind the outflow space (30) downstream, a flexible wall (32) delimiting the outflow space (30), and a counterspace (36) which is arranged on that side of the flexible wall (32) which faces away from the outflow space (30), **characterized in that** an outflow duct (10) of the piston pump (1) is connected to the counterspace (36) via a connection (51) behind the throttle (39) downstream.

2. Piston pump according to Claim 1, **characterized in that** the pulsation smoothing device (40) is arranged in spatial terms directly in the region of the outlet valve (24).

3. Piston pump according to Claim 1 or 2, **characterized in that** a compressible body (34, 48, 55) is provided in the outflow space (30).

4. Piston pump according to Claim 1 or 2, **characterized in that** a damping body (34, 48, 55) is provided in the outflow space (30).

5. Piston pump according to one of Claims 1 to 4, **characterized in that** a connecting throttle (51a) is arranged between the outflow duct (10) and the counterspace (36).

6. Piston pump according to one of Claims 1 to 5, **characterized in that** swirl throttling (60) is arranged between the outflow space (30) and the outflow duct (10).

## Revendications

1. Pompe à piston comprenant un piston de pompe (14) monté coulissant dans un carter de pompe (2), une soupape d'admission (22), une soupape d'échappement (24) et une chambre de compression (20) disposée dans le carter de pompe (2) entre la soupape d'admission (22) et la soupape d'échappement (24), et qui s'agrandit pendant une course d'aspiration du piston de pompe (14) et se réduit pendant une course de compression du piston de pompe (14), avec un dispositif de lissage des pulsations (40) disposé dans la région de la soupape d'échappement, et qui comprend une chambre d'écoulement (30) associée à la soupape d'échappement (24), un étranglement (39) prévu en aval de la chambre d'écoulement (30), une paroi flexible (32) qui limite la chambre d'écoulement (30) et une chambre conjuguée (36) disposée sur le côté de la paroi flexible qui est éloigné de la chambre d'écoulement (30),
**caractérisée en ce qu'**
un conduit de refoulement (10) de la pompe à piston (1) est relié à la chambre conjuguée (36) en aval de l'étranglement (39) par une liaison (51).

2. Pompe à piston selon la revendication 1,
**caractérisée en ce que**
considéré dans l'espace, le dispositif de lissage des pulsations (40) est disposé directement dans la région de la soupape d'échappement (24).

3. Pompe à piston selon la revendication 1 ou 2,
**caractérisée en ce qu'**
un corps compressible (34, 48, 55) est prévu dans la chambre d'écoulement (30).

4. Pompe à piston selon la revendication 1 ou 2,
**caractérisée en ce qu'**
un corps amortisseur (34, 48, 55) est prévu dans la chambre d'écoulement (30).

5. Pompe à piston selon une des revendications 1 à 4,
**caractérisée en ce qu'**
un étranglement de liaison (51a) est disposé entre le conduit d'écoulement (10) et la chambre conjuguée (36).

6. Pompe à piston selon une des revendications 1 à 5,
**caractérisée en ce qu'**
un étranglement de turbulence (60) est disposé entre la chambre d'écoulement (30) et le conduit de refoulement (10).
